# EUROPEAN PATENT APPLICATION

(11) **EP 3 896 762 A1**
(43) Date of publication of application: **20.10.2021**
(21) Application number: 21020206.5
(22) Date of filing: 14.04.2021
(51) Int. Cl.: H01M 4/38, H01M 4/40, H01M 4/42, H01M 4/46, H01M 4/58, H01M 4/583, H01M 4/587, H01G 11/32, H01G 11/62, H01M 10/052, H01M 10/054, H01M 10/056, H01M 10/04, H01M 4/139

(54) **A SECONDARY BATTERY CONTAINING AN ELECTROLYTE OF METAL PERCHLORATE**

(30) Priority: 14.04.2020 LU 101731
(71) Applicant: Fyzikální ústav AV CR, v.v.i., 18221 Praha 8 (CZ)
(72) Inventor: Cervenka, Jiri, 162 00 Praha 6 (CZ); Silhavik, Martin, 162 00 Praha 6 (CZ)

(57) **Abstract**

The present invention relates to a secondary aqueous battery capable of periodical charging and re-charging. In a first aspect of the present invention, the secondary aqueous battery comprises an anode, a cathode, and an electrolyte, wherein the electrolyte is an aqueous solution of metal perchlorate in water-in-salt concentration offering a wide electrochemical stability window. The second aspect relates to a method of manufacturing the secondary aqueous battery.

## Description

### Field of the invention

The present invention relates to the technical field of a secondary battery. In particular, the present invention pertains to metal perchlorate-based aqueous electrolytes with an electrochemical stability window above the window of water, i.e. >1.23 V. In some aspects, the present invention concerns a secondary battery using an anode, a cathode, and the electrolyte.

In another aspect, the present invention concerns a method of fabricating the secondary battery.

### Background of the Invention

Secondary batteries are also referred to as rechargeable batteries, secondary cells, or storage cells. Such batteries are types of electrochemical batteries that can be charged, discharged into a load, and recharged many times, as opposed to a disposable or primary battery, which is supplied fully charged and discarded after use. There are at least three types of secondary batteries. The first type inherently comprises an electrolyte, an anode, a cathode and a separator in between them. The other type is known as flow-batteries, which are recharged by replacing the electrolyte liquid. Unlike the first type of secondary batteries, a flow-battery is an electrochemical cell, with the exception that the electrolyte (anolyte and catholyte) is not stored in the cell around the electrodes. Rather, the electrolyte is stored outside of the cell and can be fed into the reaction cell by pumps where Ion-exchange happens in order to generate electricity. An embodiment of flow-type batteries is highly impractical in the case of mobile energy storage systems. The third type of secondary battery involves a hybrid electrochemical battery and supercapacitor systems that can be used both for charge and power storage. Such secondary batteries are also referred to as hybrid cells, hybrid batteries and hybrid supercapacitor batteries, or electrochemical supercapacitors. However, such a secondary battery differs from the conventional supercapacitors by significantly higher energy density (Wh/kg) because the secondary battery involves intercalation, insertion, alloying, faradaic redox reactions with charge-transfer, or conversion reactions of the electrochemically active species on and in the anode and cathode materials. The conventional supercapacitors have low energy density but high-power density (W/kg) and involve only capacitive, surface, and adsorption reactions of electrochemically active species on the electrodes. The main drawback of the supercapacitors is that they have very low energy density and get discharge very quickly, and cannot be used in applications where a long and continuous energy supply is required.

The widespread usage of handheld and industrial electronic devices and recent developments of electric vehicles is only beholden to the secondary batteries, especially, to lithium-ion batteries (LIBs). Nevertheless, the scarcity, high cost, and safety concerns of the state-of-the-art LIBs have urged scientists and researchers to quest for alternative secondary batteries. The primary challenge of the current secondary batteries is to deal with the highly volatile electrolytes, which are also limiting state-of-the-art LIBs. Hence, great efforts have been devoted to developing non-volatile or aqueous-based electrolytes as well as multivalent ion-based secondary batteries, such as Al³⁺, Zn²⁺, etc. Furthermore, aluminium and zinc metals can be significantly cheaper and more environmentally friendly than Li metal and have a higher theoretical energy density than Li (AI-8056 mAh.cm⁻³, Zn 5857mAh.cm⁻³, Li-2242 mAh.cm⁻³). However, the most recent development made in post-lithium metal batteries involves systems that use organic, volatile, and corrosive electrolyte components which require special handling and inert atmosphere during the manufacturing process, hence, adding additional cost.

Aqueous batteries are considered as low cost and safe owing to the use of aqueous electrolytes. Nevertheless, the biggest bottleneck is the narrow electrochemical stability window (1.23 V) of aqueous electrolytes under thermodynamic equilibrium that is preventing from attaining higher energy and power densities in most of the aqueous-based secondary batteries, including multivalent systems.

Recently, the concept of water-in-salt based electrolytes (WiSE) has been developed at the University of Maryland. WiSE has been defined as an electrolyte for which the salt exceeds the solvent by both weight and volume. See, L. Suo, et al., Science 350 (2015) (6263) 938-943. The article discloses Li-ion base aqueous batteries having an electrolyte of various LiTFSI salt concentrations.

US 10,153,511 discloses a flow re-chargeable battery comprising a cathode and anode electrolyte. In an embodiment, a nanoelectrofuel composition is provided. The composition comprises nanoparticles dispersed in an electrolyte, which includes a salt of an intercalating element and a polar aprotic solvent. The electrolyte can be solvent of perchlorate including salts, e.g. LiClO₄, NaClO₄, KClO₄, NH₄ClO₄, Ca(ClO₄)₂, Mg(ClO₄)₂. The embodiment mentioned in the above-identified document provides a flow battery which is a different type of EESS than the conventional secondary batteries. The fundamental difference between conventional batteries and flow cells is that energy is stored in the electrode material in conventional non-batteries, while it is stored in the electrolyte (catholyte/anolyte) in flow cells.

KR101696034 discloses a flow cell used as a battery capable of charging. It may perform charge and discharge by oxidation and reduction of the electrically active material in the electrodes. The document further discloses a metal perchlorate as an electrolyte. In particular, following specific metal are disclosed: Mg(ClO₄)₂, Ca(ClO₄)₂, Sr(ClO₄)₂, Ag(ClO₄)₂, Cu(ClO₄)₂, Au(ClO₄)₃, Zn(ClO₄)₂, Ni(ClO₄)₂, Fe(ClO₄)₂, Pb(ClO₄)₂, and Al(ClO₄)₃. The solvent of the electrolyte can be aqueous or non-aqueous liquid. The concentration of the solvent is from 0.1 - 5 M, and in another embodiment 100 M. One of the electrodes is a porous carbon. However, the above-mentioned embodiments provide cases of a flow cell.

US2019157701 also discloses a flow-cell rechargeable battery system. The battery system can be configured such that the reversal of the current will cause recharging of the battery cell or system. The liquid phase is an ionically conductive liquid serving as an electrolyte containing salts of perchlorate. The reagent solution can include each ionic compound or salt independently in an amount of about 0.01 g, about 0.1 g, or about 1 g to about 10 g, about 50 g, about 100 g, or about 500 g per 100 g of water.

The object of the present invention is to provide a safe rechargeable battery that is capable to charge and discharge above the water window (1.23 V). In parallel, this invention provides a battery, which is safe, mechanically simple and is difficult to be set on fire.

### Summary of the invention

The above-mentioned problems related to providing a safe rechargeable battery are solved by the present invention, which is in a first aspect a secondary battery based on an aqueous electrolyte. In a second aspect of the present invention, a method for manufacturing the secondary battery is provided.

The secondary aqueous battery according to the present invention is defined in claim 1.

Due to the solute to solvent mass ratio being higher than one in the water-in-salt electrolyte (WiSE) of metal perchlorate, the system provides a wide electrochemical window by reducing the electrochemical activity of the water on the electrodes, thus being capable to charge and discharge the secondary battery at a higher voltage. Furthermore, according to the inventor's test by heating the secondary battery in the form of a pouch cell over an open flame, no smoke or fire was witnessed. Thus, the adoption of the aqueous electrolyte according to the present invention omits the fire hazards and makes such a secondary battery safer than the state-of-the-art Li-ion batteries. Further, the battery does not require any macroscopically flowing electrolyte, which is simpler for manufacturing since it does not require mechanical means, such as a pump, for flowing the electrolyte, and it is easier to move and include into the moving object, such as vehicles or cell phones. The secondary battery comprises an anode, a cathode, with a separator in between them, and an electrolyte. The electrochemical reactions of electrochemically active species are provided on and in the anode and the cathode to store electrochemical energy. The electrochemical reactions provided in the secondary battery are selected from the group of: intercalation, insertion, alloying, faradaic redox reactions with charge-transfer or conversion reactions. Those reactions are responsible for the technical effect which provides distinction over supercapacitors in terms of higher energy density.

In a preferred embodiment, the anode is a metal being made of the metal corresponding to the metal in the electrolyte or graphite. In some examples, the anode can be Al for Al(ClO₄)₃ electrolyte or Zn anode for Zn(ClO₄)₂.

Hereinafter, the electrochemical stability window is defined as a potential range within which an electrolyte does not get reduced or oxidized, in other words, the electrolyte does not decompose. On the other hand, the electrochemical potential is the potential difference (ΔE= E₂-E₁) between two electrodes.

In a preferred embodiment, the metal perchlorate salt for the WiSE is selected from the perchlorate group consisting of Al, Zn, Mg, Ca, K, Na, Li, Fe or their combinations, more preferably Al, Zn, Mg, Ca, Fe or their combinations.

The battery can generate electrical energy from electrochemical reactions involving metal cations (e.g. Al³⁺, Zn²⁺, Mg²⁺, Ca²⁺, K⁺, Na⁺, Li⁺, Fe²⁺, Fe³⁺, Fe⁴⁺, etc.) and perchlorate anions (ClO⁴⁻). The system can be reversibly charged, discharged into a load many times. It is more preferred to have a system with an electrolyte of metal perchlorate, where the metal is multivalent, e.g. Al³⁺, Zn²⁺, Mg²⁺, Ca²⁺. The multivalence provides an additional advantage of higher energy density in the system; thus, it can further improve the energy to be stored in the system per unit mass and volume.

In another embodiment, the mass ratio of the perchlorates to water is from 2 to 60.

In another embodiment, electrolyte molality (m) (moles of salt per kg of water), is ranging up to 60 m. Higher molality is providing a wider stability window. In some embodiment, the molality of about 60 m can be achieved by heating the water-in-salt electrolyte.

In another embodiment, the electrolyte is a saturated or oversaturated solution. The saturated or oversaturated solution is capable to offer a wide electrochemical stability window of 4 V and enables working under extreme conditions by lowering the freezing point and raising the boiling point of the WiSE, which implies that the system can operate at negative temperature environments as well as at elevated temperatures.

In another embodiment, the secondary aqueous battery, wherein the anode is selected from the group of Al, Zn, Mg, Ca, K, Na, Li, Fe, C, or a metal alloy comprising these elements. In a more preferred embodiment, the anode is a metal anode being made of the metal corresponding to the metal in the electrolyte.

In another embodiment, the cathode is selected from the group:
- metal chalcogenides MEₓ, where E = O, S, Se, Te, As; more preferably metal oxides MOₓ, where M is a transition metal; or
- metal hexacyanoferrates, where M is a transition metal, or
- carbon selected from the group: graphite, graphene, carbon nanotubes, amorphous carbon, more preferably the graphite selected from the group natural graphite, pyrolytic graphite, HOPG, reduced graphite, 3D graphite foam, graphite paper, exfoliated graphite paper; or combinations thereof.

In another embodiment, the secondary aqueous battery further comprises a separator lying between the cathode and the anode, the separator is capable to electrically insulate the cathode and anode but allows the transportation of ions between them. Therein, a paper filter; or paper or glass micro filters are the preferred type of separator.

In another embodiment, the secondary aqueous battery is consisting of a single cell.

In another embodiment of the system, the secondary aqueous battery comprises a plurality of cells.

In some embodiments, the secondary aqueous battery can be of any shape or kind, except the type cells, where the electrolyte is flowing in the cell. The battery according to the present invention can be coin-shaped, button-shaped, pouch-type, layered, cylindrical, flat, or square. Optionally, it may include additional materials for protection and monitoring battery health and safety, such as potting, casing, wires, sensors, or electrical controllers.

In a preferred embodiment, the battery further comprises a current collector, wherein the anode and/or cathode material is coated on the current collector. More preferably, the material of anode and/or cathode is a composite material made from a slurry of fine powders, a binder and electrically conductive material. In some embodiment, the anode and/or cathode can be porous or further provided with additives, such as carbon nanocrystals, for improving the electrical conductivity.

In the second aspect of the present invention, the method for manufacturing the secondary battery according to any embodiments is provided. The method is defined in claim 13.

In a preferred embodiment, the anode and/or cathode is a composite material. The step of making the composite material, as a part of the method of manufacturing the battery according to the present invention, is defined in claim 14.

It is further advantageous to bubble an inert gas, preferably N₂ or Ar into the electrolyte in order to remove dissolved gasses, especially, O₂.

### Brief description of drawings

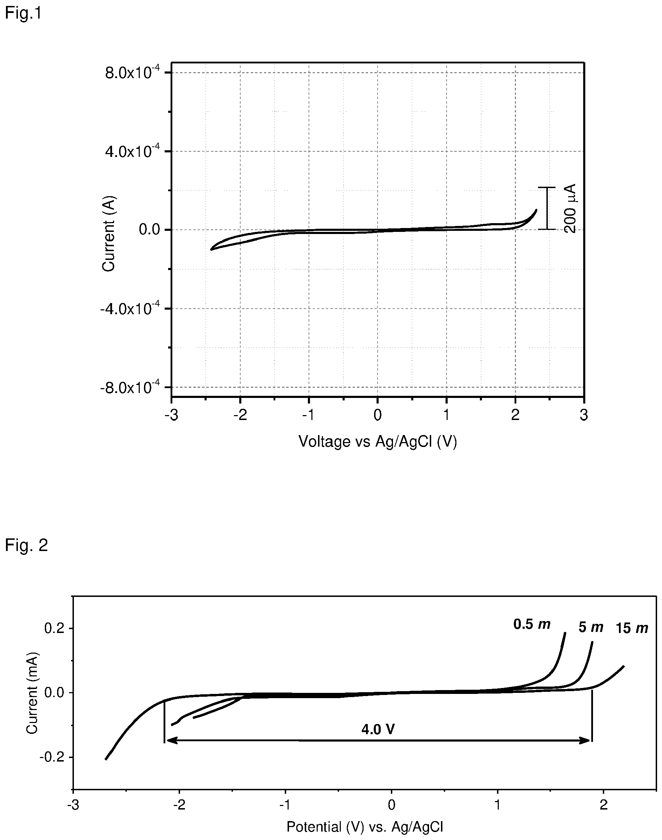

**FIG. 1** shows the cyclic voltammogram of the WiSE used in examples 1 and 2 of the present invention, wherein glassy carbon was used as a working electrode, Pt sheet was used as a counter electrode, and an Ag/AgCl was used as a counter electrode. A scan rate of 10 mVs⁻¹ was applied and the as-tested WiSE has shown a very good electrochemical stability in the applied potential window i.e. 2 to -2 V (4 V).
**FIG. 2** shows the linear sweep voltammogram (LSV) of the WiSE used in example 1 and 2 of the present invention in comparison to dilute electrolytes of the same metal perchlorate salt, wherein glassy carbon was used as a working electrode, Pt sheet was used as a counter electrode, and an Ag/AgCl was used as a counter electrode. The WiSE demonstrate a very good electrochemical stability in the applied potential window i.e. in the range of 2 to -2 V (4 V) at a scan rate of 5 mVs⁻¹. Whereas low concentration electrolytes show a narrow stability window. The stability window is independent of scan rate, and the same window was achieved at low (0.1 mVs⁻¹) and high (10 mVs⁻¹) scan rates.

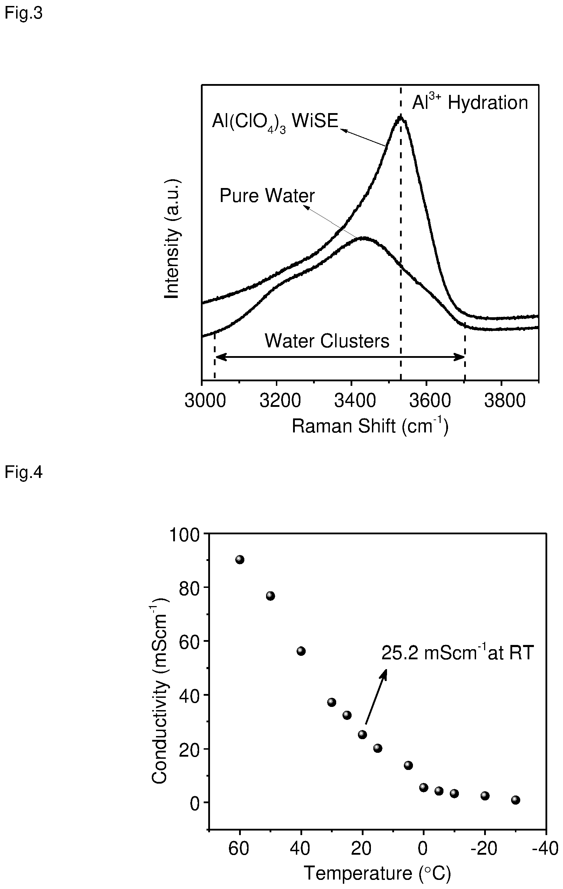

**FIG. 3** shows the Raman spectra of the WiSE used in examples 1 and 2 of the present invention, where the wavenumber region corresponding to the OH stretching vibrations of pure water vs. Al(ClO₄)₃ WiSE is shown. The Raman spectrum of the WiSE is showing a narrow peak at 3530 cm⁻¹ that is characteristic for the bound water molecules to cations, while the Raman spectrum of the pure water demonstrates a broadband peak of free water molecules, which are arising from the OH stretching vibrations. It testifies that there is no or very little free water in the WiSE.
**FIG. 4** shows a plot of electrical conductivity vs. temperature of the WISE used in examples 1 and 2 of the present invention.

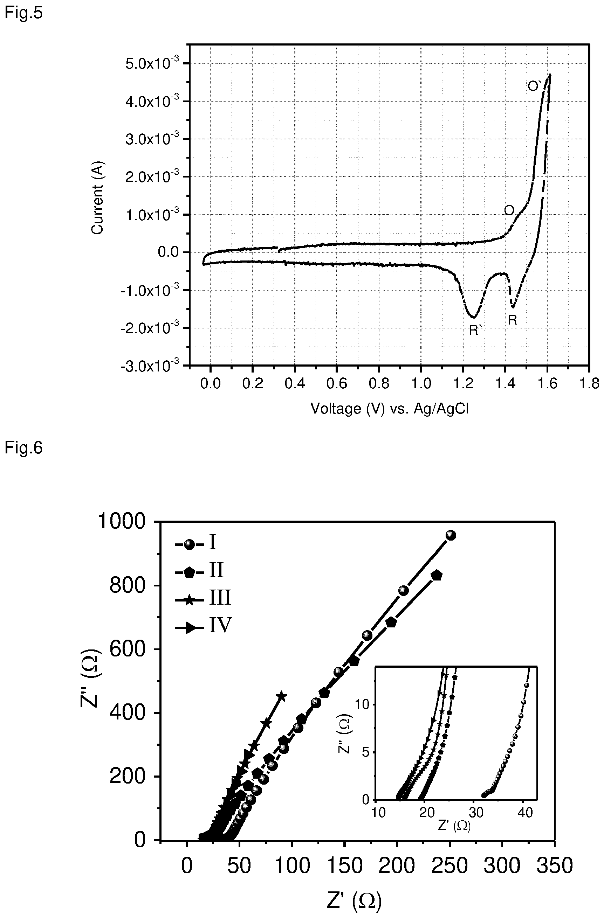

**FIG. 5** shows the cyclic voltammogram of a graphitic cathode used as a working electrode in the WiSE used in examples 1 and 2 of the present invention. The voltammogram shows two oxidation peaks (O and O') and corresponding reduction peaks (R and R'). The test was performed in a half-electrochemical cell, where a Pt sheet and an Ag/AgCl were utilized as counter and counter electrodes, respectively. A scan rate of 10 mVs⁻¹ was applied in the potential window of 0 to 1.6 V.
**FIG. 6** Fig. 6 shows Nyquist plots of different stages of a graphitic cathode in the WiSE used in examples 1 and 2 of the present invention. Stage I and II denote plots of soaked cathodes in the WiSE for 10 min and 20 min. Stage III denotes plots of graphitic cathode after 30 CV scans, and stage IV after 180 charge-discharge cycles at 200 mAg⁻¹.

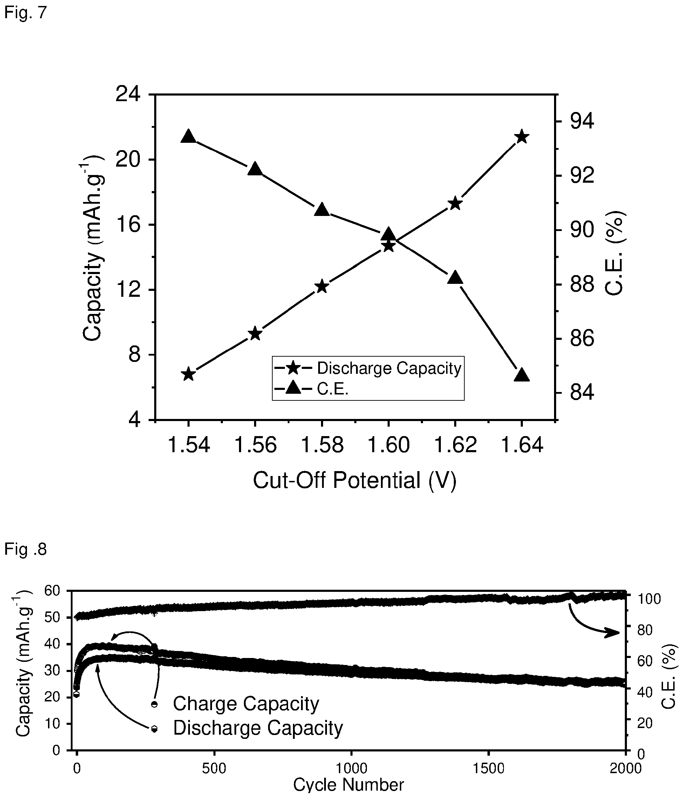

**FIG. 7** shows the relationship between cut-off potentials, discharged capacities, and Coulombic efficiencies of the electrochemical half cell used in example 1 of the present invention to study the reactions and electrochemical performance of the cathode for the secondary battery.
**FIG. 8** shows the cycling performance of the graphitic cathode used as a graphitic cathode in WiSE used in examples 1 and 2 of the present invention. The test was performed in a half-electrochemical cell, where Pt sheet and Ag/AgCl are utilized as counter and reference electrodes, respectively. A current density of 200 mAg⁻¹ was applied and the cell was reversibly charged and discharged to 1.64 V and 0 V, respectively. A reversible capacity of the range of 26-35 mAhg⁻¹ was achieved for 2000 cycles with improved Coulombic efficiency of about 98% in the later cycles.

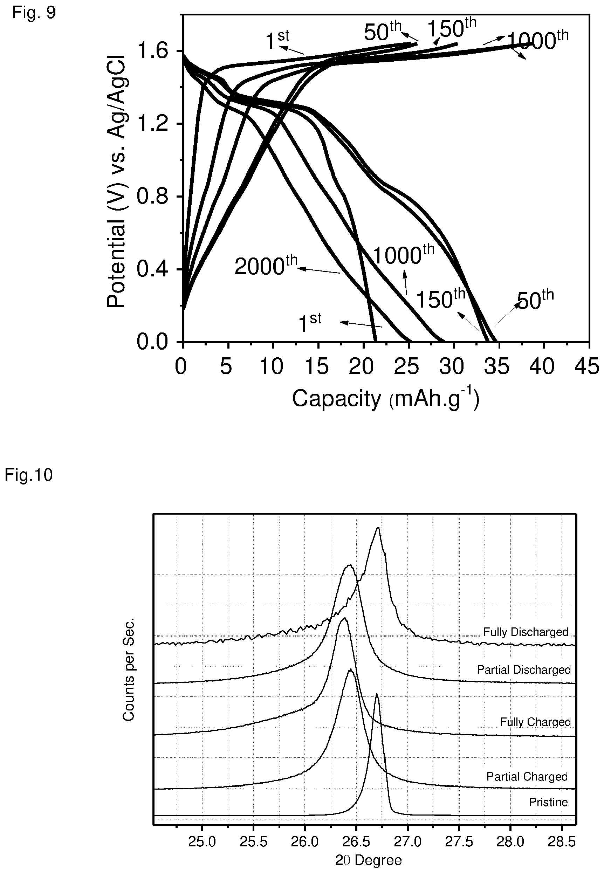

**FIG.9** shows charge-discharge curves at different cycle numbers at the cut-off potential of 1.64 V vs. Ag/AgCl at the current density of 200 mAg⁻¹ of the graphitic cathode used in example 1 of the present invention.
**FIG.10** shows the ex-situ XRD analysis of the cathode material used in example 1 of the present invention. The observed shift of the (002) graphite peak towards a lower 2 theta angle confirms the intercalation/insertion of ions into the cathode and the occurrence of a charge transfer process. The recovery of the XRD peak to its original place after discharging shows the de-intercalation of ions from the cathode. Additionally, it confirms that the process is reversible, which is requisite of the rechargeable battery operation.

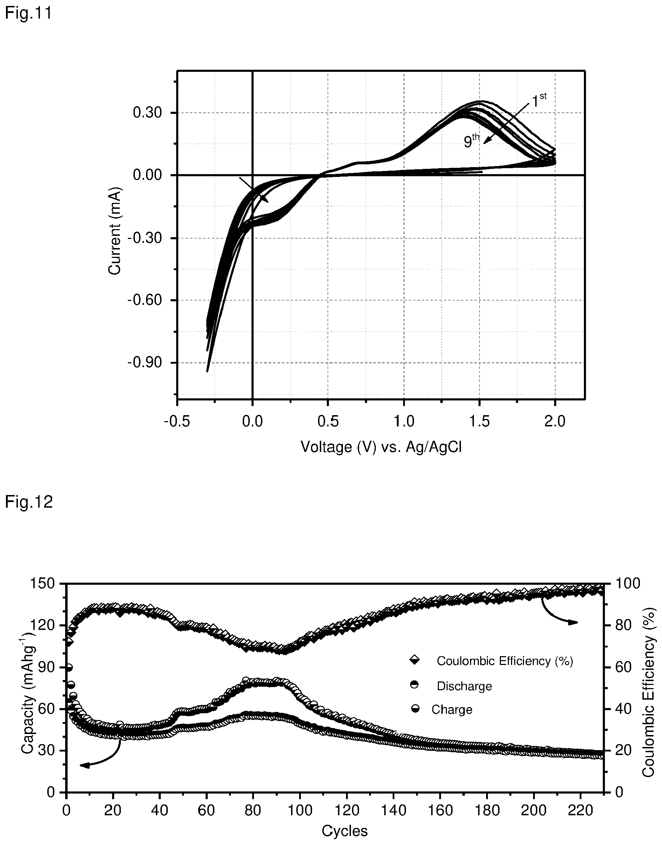

**FIG. 11** shows the stripping and plating analysis of Al on Pt substrate from the WISE used in examples 1 and 2 of the present invention. The spectra were measured at a scan rate of 10 mVS⁻¹. The half-cell comprises Al as both the counter and reference electrodes, and Pt as the working electrode. The results show the reversible stripping/plating of the Al³⁺ from/on Pt in the WiSE, which confirms the suitability of the Al anode for the Al- secondary battery. **FIG. 12** shows the charge-discharge capacity and the Coulombic efficiency of the aqueous Al battery for more than 200 charge-discharge cycles prepared in example 2 of the present invention. The maximum discharged capacity of 62 mAhg⁻¹ was achieved at the start. The results were measured versus Al/Al⁺³.

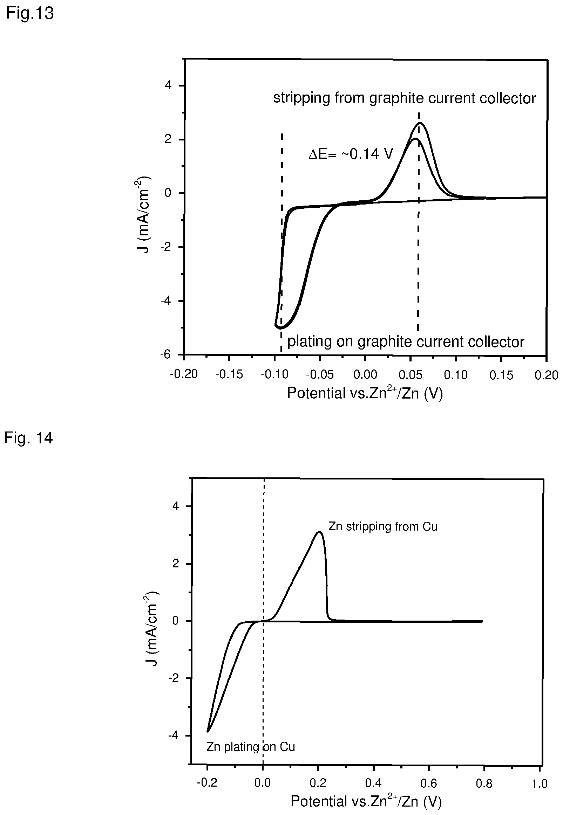

**FIG. 13** shows the stripping and plating analysis of Zn on Cu substrate from the WISE used in example 3 of the present invention. The spectra were measured at a scan rate of 10 mVS⁻¹. The half-cell comprises Zn as both the counter and reference electrodes, and Cu as the working electrode. The results show the reversible stripping/plating of the Zn²⁺ from/on Cu in the WiSE, which confirms the suitability of the WiSE as an electrolyte for the Zn- secondary battery.
**FIG. 14** shows the stripping and plating analysis of Zn on graphite substrate which is also used as a current collector from the WISE in example 3 of the present invention. The spectrum was measured at a scan rate of 10 mVS⁻¹. The half-cell comprises Zn as both the counter and reference electrodes, and graphite as the working electrode. The results show the reversible stripping/plating of the Zn²⁺ from/on graphite substrate in the WiSE, which further confirms the suitability of the WiSE used in example 3 as an electrolyte for the Zn- secondary battery.

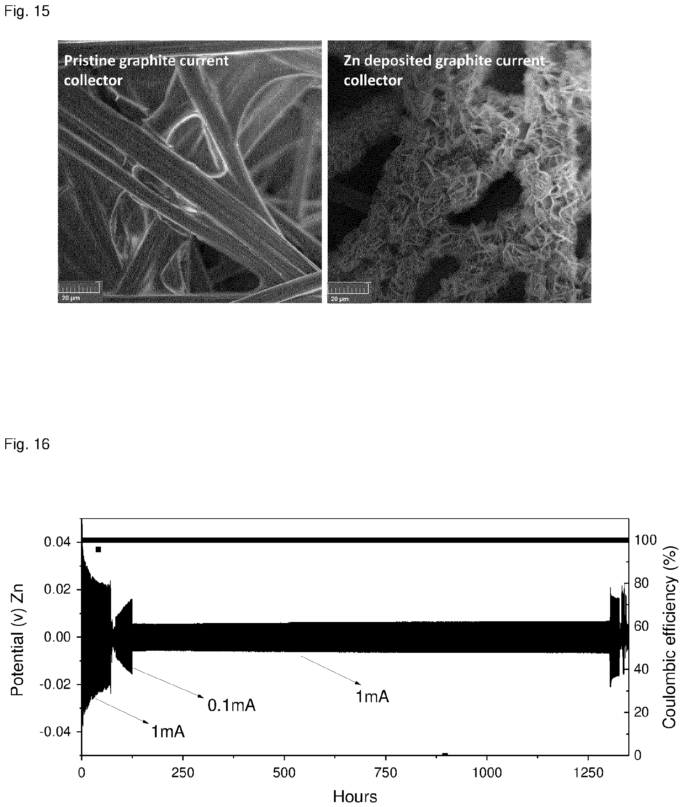

**FIG. 15** shows SEM images of a graphite current collector used in example 3. The images show pristine (left) and Zn plated graphite (right). Zn can be seen in the form of crystals on the surface of the graphite fibers.
**FIG. 16** shows the stripping analysis of a symmetric Zn/Zn cell using the same electrolyte as in example 3 of the present invention. The striping analysis was done at the current density of 1 mA. The cell was charged for 1 hr and then discharge for 1 hr. In every cycle, over-potential of the Zn metal stripping and platting was recorded. A current density of 0.1 mA was applied in some of the cycles to reduce the over-potential and enhance the cell life over 1250 hr.

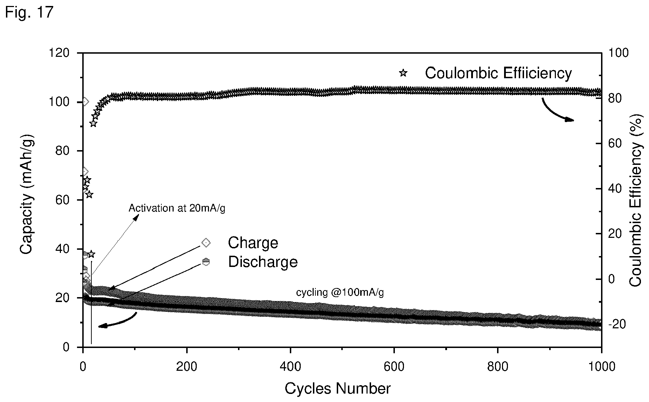

**FIG. 17** shows the charge-discharge capacity and the Coulombic efficiency for 1000 cycles of the aqueous Zn battery prepared in example 3 of the present invention. A discharged capacity of -25 mAhg⁻¹ was achieved during the charge-discharge cycling test. The results were measured versus Zn/Zn⁺².

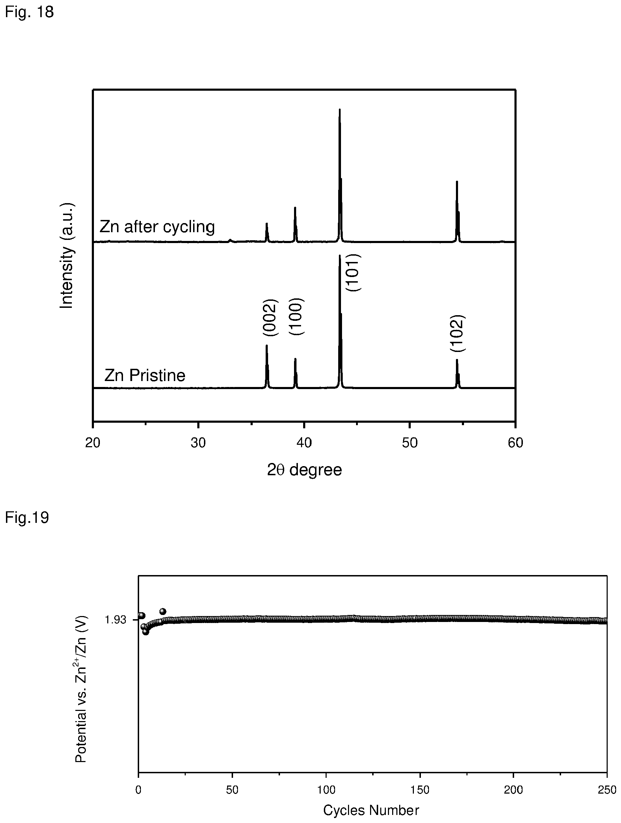

**FIG. 18** shows the ex-situ XRD of the pristine and cycled Zn metal electrode used in example 3. There is no evident change of the structure even after long cycling in the WISE.
**FIG. 19** shows a high and stable mid-discharge voltage of 1.93 V vs Zn/Zn⁺² of the aqueous Zn battery using the zinc perchlorate based WiSE prepared in example 3 of the present invention. The mid-discharge voltage is above the electrochemical window of water (1.23 V).

### Detailed description of the invention

In some embodiments carried out in accordance with the present invention, a method for preparing a metal perchlorate based aqueous electrolyte comprises the steps of mixing 5 g of water with 95 g of Al(ClO₄)₃, in more preferred embodiments the step comprises mixing 5 g of water with 35g of Al(ClO₄)₃. The mixture was subsequently stirred; therefrom a WiSE was prepared. In another embodiment, mixing of 10 g of water and 20 g Zn(ClO₄)₂ was mixed and stirred, also therefrom a WiSE is prepared. In yet another embodiment, 10 kg of water and 3 kg of Mg(ClO₄)₂, 6 kg of calcium perchlorate Ca(ClO₄)₂, and 3 kg of potassium perchlorate K(ClO₄) and 50 g of Al(ClO₄)₃ was mixed and stirred, thus forming a mixture of WiSE for bulk applications. It shall be understood that another salt of metal perchlorate can also be added or mixed in accordance with the embodiments above.

In another embodiment, any of the above-mentioned salts could be stirred for a certain time, e.g. 3 h. During the stirring, an inert gas, such as nitrogen or argon, can be passed through to remove dissolved air, more specifically, O₂.

Production of WISE according to the present invention is by the heat-treatment of the salt followed by mixing it with water in a certain ratio by stirring. Heating of the salt is performed in an environment with a temperature above 80 °C. The atmosphere may be in the air or an inert atmosphere. The heating temperature is preferably not more than the melting temperature (Tₘ) of the salts. The heating time is at least 1 hour or more. There is no specific specification for the temperature ramping rate. The temperature may be ramped slowly to a predetermined temperature or heated rapidly.

In some embodiments, the electrolyte molality is ranging up to 60 m. In one embodiment, a WiSE with a molality of 15 m can be used, however, in another embodiment it can be taken as 21 m. In addition to the above, in some embodiments, the saturated solution of metal perchlorate, e.g. Al(ClO₄)₃, Zn(ClO₄)₂, Mg(ClO₄)₂, Ca(ClO₄)₂, K(ClO₄), Na(ClO₄), Li(ClO₄), Fe(ClO₄)₃, or mixture thereof. In yet another embodiment, an oversaturated solution can be used, provided the condition of the oversaturated solution will be kept in the final battery product. It is preferred to provide metal perchlorate WiSE of metals being capable to provide multivalence, such as Al(ClO₄)₃, Zn(ClO₄)₂, Mg(ClO₄)₂, Ca(ClO₄)₂, Fe(ClO₄)₃, Fe(ClO₄)₂, Fe(ClO₄)₄, etc.

In some embodiments, the secondary battery comprising: an anode, a cathode, a separator, and an electrolyte. The secondary aqueous battery comprises: an anode, an electrolyte in accordance with the examples above; a cathode, and a separator disposed between the anode and the cathode. In certain embodiments, the anode comprises metal from the group of Al, Zn, Mg, Ca, K, Na, Li, Fe or a metal alloy comprising these or other elements; wherein the metal anode is made of metal corresponding to the metal in the WiSE. Further, the cathode comprises carbon, e.g. graphite, graphene, carbon nanotubes, amorphous carbon, more preferably the graphite selected from the group natural graphite, pyrolytic graphite, HOPG, reduced graphite, 3D graphite foam, graphite paper, exfoliated graphite paper or carbon fibers. The separator can be a paper filter or glass microfiber filters.

In some embodiments, the cathode comprises a current collector and involves other materials including a binder, a conductivity enhancer, a disperser, and combinations thereof. In some embodiments, the cathode is free-standing. In some embodiments, the cathode further comprises a polyvinylidene fluoride (PVDF) binder, an N-Methyl-2-pyrrolidone (NMP) disperser, and a conductivity enhancer (Ketjen Black or Super-P etc.). Further, in some embodiments, the current collector comprises a metal sheet (Molybdenum, Tungsten, Tin, Nickel or Thallium etc.), carbon tape, carbon cloth, or gas diffusion carbon sheet.

In some embodiments, the cathode slurry is prepared according to the following formula active material (AM): binder (B): conductive material (CM) = 70-90:5-15:5-25, and the as-prepared slurry is coated on a current collector by a doctor blade or spin-coater and oven-dried at 60 °C -120 °C for at least 1 h.

### Example 1 - Electrochemical Half-Cell based on Aluminium perchlorate based WiSE.

Electrochemical half-cells were prepared to study the behavior of the cathodes and anodes used in the embodiments of the present invention. Half-cell allows studying the redox reactions on a particular electrode in a given electrolyte with respect to a standard reference electrode. The study provides the suitability of a particular cathode or anode in a given electrolyte for the application of the full rechargeable or secondary battery.

5g of water and 36.55g of Al(ClO₄)₃ were mixed and stirred to prepare aluminium perchlorate based WiSE. The as-prepared WiSE was utilized in a three-electrode electrochemical half-cell, where a Pt counter electrode and an Ag/AgCl (3 M KCL aq. solution) as a reference electrode was applied. The working electrode was prepared by pasting a slurry of the active material, which is ultra-sonicated HOPG flakes, polyvinylidene fluoride (PVDF) binder, and Super-P conductive carbon in the ratio of 80:10:10, respectively, onto the Toray carbon paper, wherein the mass of the positive electrode is about 3-8 mg. The as-prepared positive electrode was dried in an oven at 80 °C before testing in a three-electrode cell.

The cyclic voltammetry (CV), linear sweep voltammetry (LSV), and electrochemical impedance spectroscopy (EIS) of the three-electrode half cells were investigated at Metrohm Autolab (PGSTAT302n). CV and LSV were performed at a scan rate of 10 mV/s and 5 mV/s. The CV and LSV results are shown in Fig. 1 and Fig. 2, respectively. Fig. 1 shows a plot of the cyclic voltammetry for the half cells prepared in example 1 of the present invention. Fig. 6 shows the EIS plots of different stages of the graphite electrode used in Examples 1 and 2. The charge-discharge testing of the half-cell was carried out and the results are presented in Fig. 8, where the half-cell was charged to 1.64 V and discharged to 0 V. Whereas, the cycle life and Coulombic efficiency of the half-cell are presented in Fig.8 for 2000 cycles. Fig. 9 shows the charge-discharge curves for the 50^{th}, 150^{th}, 1000^{th}, and 2000^{th} cycles.

The ex-situ X-ray diffraction (XRD) of the positive cathode carried out by charging the as-prepared cathode materials to different voltages, for instance, 1 V, 1.55 V, and 1.6 V, and then discharged to 1.45 V, 1.28 V, and 0.8 V. The experimental results are presented in Fig. 10.

### Example 2 - Al metal-based aqueous secondary battery utilizing aluminium perchlorate based WiSE and graphite cathode.

The aqueous electrolyte and positive cathode utilized in example 1 of this invention were also inducted in example 2. However, the construction of the electrochemical cell was using a two-electrode secondary battery. The secondary battery comprising Al anode; Al(ClO₄)₃ WiSE electrolyte; and HOPG cathode. The secondary battery was charged to 2.3 V and discharged to 0.5 V for more than 200 cycles. The experimental results are presented in Fig. 12. It can be seen in Fig. 12 that the Coulobic efficiency of the as assembled battery increased with the cycle life, which is due to improved reaction kinetics of the electrodes in the electrolyte.

The safety tests of the as-assembled aqueous battery were done by twisting the pouch-cell to 90 °C a few times and also by heating the pouch cell over an open flame. No smoke or fire was witnessed in the tests. The aqueous electrolyte prohibits fire hazards, making these batteries safer.

### Example 3 - Zn metal-based secondary battery utilizing zinc perchlorate based aqueous electrolyte and graphite cathode

To prepare Zn perchlorate based WiSE, 5g of deionized water and 13.03 g of Zn(ClO₄)₃ were mixed and stirred at room temperature. The as-prepared WiSE was utilized in a two-electrode electrochemical full cell including a Zn metal plate as the counter and reference electrode, and a graphite paper as the positive electrode. The batch type (non-flow) secondary battery was galvanostatically charged and discharged to 2.3 V and 0.1 V, respectively. The experimental results including the charge-discharge, cycle life and Coulombic efficiency are disclosed in Fig. 17. The Coulombic efficiency was low in the start but later improved to nearly 100% after tens of reversible charge-discharge cycles. Fig. 19 shows 250 cycles of the mid-discharge voltage of 1.93 V vs Zn/Zn+2 of the aqueous Zn battery using the zinc perchloride based WiSE prepared in example 3.

In some embodiments, the half-cell was comprised of Zn counter and reference electrodes and Cu as a working electrode, wherein, in some embodiments, the working electrode was graphitic substrate, the same as used for the current collector in examples 1-3. Wherein, the electrolyte was the same as in example 3. Fig. 13 and 14 show CV results of the Zn deposition and stripping on and from the Cu and graphite electrodes. SEM images of the Zn- plated graphite substrate are shown in Fig. 15.

In some embodiments, the cell was symmetric, which implies Zn was used as a counter, reference and working electrode to investigate the over-potential during the Zn stripping/platting analysis. Wherein, the electrolyte was the same as in example 3. The results are presented in Fig. 16, where a cell was charged for 1 hr and discharge for 1 hr at the current density of 1 mA, and an overpotential of ∼ 50 mV was recorded. Then the cell was set to a lower current density of 0.1 mA for few cycles, which tuned the Zn metal electrodes, and resulted in a very low over-potential of ∼15- 20 mV at a high current density of 1 mA. Fig. 18 shows the ex-situ XRD of the pristine Zn metal and cycled Zn metal demonstrating no evident structural changes in the electrodes after long cycling in the WISE.

It shall be understood that the above-mentioned examples 1 - 3 can be adopted to a secondary battery cell, single or a plurality of them can be adopted to a graphite-graphite dual-ion battery.

### Example 4 - Single cell and a plurality of cells forming a battery-pack

In the following example, the construction of a single cell is provided. The single-cell system comprises an electrolyte - WiSE metal perchlorate, e.g. electrolyte in accordance with examples 1 - 3, a cathode, and an anode. In between the electrodes, a separator is provided. In a certain example, a case of a single cell a sealing plate may serve as a negative electrode and the core as a positive electrode, and in between them the reservoir containing the electrolyte and a paper filter is provided. A single cell can also be any shape or type such a coin cell, cylindrical cell, pouch cell, button cell etc. within the provided system.

In another example, a multi-cell forming a battery-pack is disclosed. The battery pack may be configured in a series, parallel, or a mixture of both to deliver the desired voltage, capacity, or power density The pack is comprising: a plurality of single electrochemical cells as disclosed above, the plurality of electrically interconnected cells disposed within the battery pack, with each electrochemical cell is comprising: a) at least one positive electrode; b) at least one negative electrode; c) separators, electrically isolating the positive and negative electrodes, but allowing for transport of ions between the positive and negative electrodes; d) electrolyte surrounding and wetting the electrodes and the separator; and e) an enclosure surrounding and enclosing the electrodes, the separator and the electrolyte. In an advanced embodiment, the enclosure may have an opening to allow the passage of both gas and electrolyte; the opening may further include hydrophobic coating or means to isolate the electrolyte of each cell while allowing the gas generated by each individual cell to exit from the enclosure of that cell.

In the preferred embodiment, a battery case is formed of plastic, although stainless steel forms another preferred embodiment, however, any of the chosen material should not undergo any side reactions with the electrolyte. The battery case lid includes a non-conductive material to isolate battery terminals from the case if the case is made of a conductive metal material. Each of the plurality of electrochemical cells includes a plurality of positive electrodes and a plurality of negative electrodes.

### Industrial applicability

The present invention may find suitability in applications in industries using conventional size secondary batteries for grid energy storage applications or other electronic devices as well as portable electronic devices where an energy storage system is required.

## Claims

1. A secondary battery comprising an aqueous electrolyte, an anode, and a cathode, wherein
- the anode and the cathode is configured to involve one or more electrochemical reactions of electrochemically active species on and in the anode and the cathode, and wherein the electrochemical reaction is selected from the group of: intercalation, insertion, alloying, faradaic redox reactions with charge-transfer or conversion reactions; and
- the aqueous electrolyte is water-in-salt metal perchlorate, and
- the solute to solvent mass ratio of the electrolyte is higher than one; and
- the electrolyte does not flow during charging or discharging.

2. The secondary aqueous battery according to claim 1, wherein the electrolyte is selected from the group of: Aluminium Perchlorate Al(ClO₄)₃, Zinc Perchlorate Zn(ClO₄)₂, Magnesium Perchlorate Mg(ClO₄)₂, Calcium Perchlorate Ca(ClO₄)₂, Potassium Perchlorate K(ClO₄), Sodium Perchlorate Na(ClO₄), Lithium Perchlorate Li(ClO₄), Ferric Perchlorate Fe(ClO₄)₃, or mixture thereof.

3. The secondary aqueous battery according to claim 1, wherein the electrolyte comprises a metal perchlorate, wherein the metal is multivalent, preferably Aluminium Perchlorate Al(ClO₄)₃, Zinc Perchlorate Zn(ClO₄)₂, Magnesium Perchlorate Mg(ClO₄)₂, Calcium Perchlorate Ca(ClO₄)₂, Ferric Perchlorate Fe(ClO₄)₃ or mixture thereof.

4. The secondary aqueous battery according to any of the previous claims, wherein the mass ratio of the perchlorates to water is from 2 to 60.

5. The secondary aqueous battery according to any of the previous claims, wherein electrolyte molality is ranging up to 60 *m*.

6. The secondary aqueous battery according to any of the previous claims, wherein the electrolyte is saturated or oversaturated solution.

7. The secondary aqueous battery according to any of the previous claims wherein the anode is a metal anode being made of the metal corresponding to the metal in the electrolyte, preferably selected from the group Al, Zn, Mg, Ca, K, Na, Li, Fe, or a metal alloy comprising these elements.

8. The secondary aqueous battery according to any of the previous claims, wherein the cathode is selected from the group:
- metal chalcogenides MEₓ, wherein E is O, S, Se, Te, As, or metal oxides MOₓ, where M is a transition metal; or
- metal hexacyanoferrates, where M is a transition metal; or
- carbon selected from the group: graphite, graphene, carbon nanotubes, amorphous carbon, more preferably the graphite selected from the group natural graphite, pyrolytic graphite, HOPG, reduced graphite, 3D graphite foam, carbon nanotubes, graphite paper, exfoliated graphite paper; or combinations thereof.

9. The secondary aqueous battery according to any of the previous claims, wherein the system further comprises a separator lying between the cathode and the anode, the separator is capable to electrically insulate the cathode and anode and capable of providing transportation of ions therein.

10. The secondary aqueous battery according to claim 9, wherein the separator comprising paper filter or glass microfiber filters.

11. The secondary aqueous battery according to any of the previous claims further comprises a current collector, wherein the anode and/or cathode material is coated on the current collector.

12. The secondary aqueous battery according to claim 11, wherein the anode and/or cathode is a composition material comprising a slurry of fine powders, a binder and electrically conductive material.

13. A method of manufacturing a secondary aqueous battery according to any of the claims 1 - 13, wherein the method comprising the steps of:
- providing an anode material, a cathode material, a current collector, and a separator;
- coating the anode and/or cathode materials on the current collector, thereby forming an anode and/or a cathode;
- placing the separator in between the anode and the cathode by stacking or rolling;
- adding a water-in-salt electrolyte of the metal perchlorate in between the anode or the cathode and the separator;
- forming the secondary battery by pressing or heat sealing.

14. The method of manufacturing according to claim 13, wherein the step of forming an anode and/or cathode comprises the steps:
- providing a powder of the anode and/or cathode material;
- mixing the powder, a binder and a conductive material, thereby making a slurry;
- providing the slurry onto the current collector;
- pressing and drying the slurry so that, the slurry forms a composite material of the anode and/or cathode.

15. The method according to claim 13 or 14, wherein an inert gas, preferably N₂ or Ar, is bubbling through the aqueous solution of the electrolyte before adding to the secondary battery.
